# EUROPÄISCHE PATENTSCHRIFT

(11) **EP 2 981 408 B1**
(45) Veröffentlichungstag und Bekanntmachung des Hinweises auf die Patenterteilung: **07.11.2018**
(21) Anmeldenummer: 14713761.6
(22) Anmeldetag: 24.03.2014
(51) Int. Cl.: B29D 11/00

(54) **ERZEUGUNG MIKROSTRUKTURIERTER BRILLENGLÄSER IN DER REZEPTGLAS-FERTIGUNG**
CREATION OF MICROSTRUCTURED SPECTACLE LENSES IN PRESCRIPTION LENS PRODUCTION
RÉALISATION DE VERRES DE LUNETTES MICROSTRUCTURÉS DANS LA FABRICATION DE VERRES CORRECTEURS

(30) Priorität: 02.04.2013 DE 102013005714
(43) Veröffentlichungstag der Anmeldung: 10.02.2016
(73) Patentinhaber: Rodenstock GmbH, 80687 München (DE)
(72) Erfinder: TRUMM, Stephan, 80999 München (DE); HUBER, Karl, 94209 Regen (DE); SCHREDER, Ferdinand, 94227 Zwiesel (DE); KÖLL, Erich, 94469 Deggendorf (DE); MÜLLER, Werner, 75443 Ötisheim (DE)
(74) Vertreter: Müller-Boré & Partner Patentanwälte PartG mbB
(86) Internationale Anmeldenummer: PCT/EP2014/000797
(87) Internationale Veröffentlichungsnummer: WO 2014/161639

(56) Entgegenhaltungen:
- EP-A2- 0 369 561
- CA-C- 2 181 937
- US-A- 5 543 966
- US-A1- 2009 046 349

## Beschreibung

Die vorliegende Erfindung betrifft ein Verfahren zur Herstellung eines Brillenglases, die an mindestens einer Linsenfläche eine diffraktive Mikrostruktur aufweist.

Diffraktive Optiken nutzen oft eine Kombination eines refraktiven und eines diffraktiven Effekts an zumindest einer Oberfläche oder Grenzfläche. Damit lassen sich selbst in komplexen Optiken mit hoher Funktionsdichte bereits mit vergleichsweise wenigen Linsenelementen sehr gute Abbildungsqualitäten erreichen. Vor allem für Anwendungen, in denen nur eine einzige Linse genutzt wird, können durch eine Kombination aus refraktiver und diffraktiver Wirkung Abbildungsfehler reduziert werden, die ansonsten nur durch mehrschichtige Linsen oder durch Linsen mit Brechungsindexgradienten unterdrückt werden können. Insbesondere bei Linsen, wie z.B. Brillengläsern, welche aus einem dispergierenden Material aufgebaut sind, werden gelegentlich diffraktive Mikrostrukturen an einer Linsenoberfläche genutzt, um beispielsweise Farbsäume aufgrund chromatischer Fehler der Linse zu reduzieren. Einige Beispiele für ein Design von diffraktiven Strukturen zur Farbsaumkorrektur sind beispielsweise aus DE 10 2010 051 627 A1, DE 10 2010 051 637 A1, DE 10 2010 051 645 A1 und DE 10 2010 051 762 A1 bekannt.

Eine der Herausforderungen bei der Nutzung diffraktiver Strukturen ist jedoch deren großer Fertigungsaufwand. Insbesondere für die Fertigung rotationssymmetrischer Strukturen haben sich spanende Bearbeitungsverfahren (z.B. Diamantdrehen) etabliert. Dabei kann entweder die herzustellende Linse direkt spanend bearbeitet werden, oder es wird eine Gießform oder ein Stempel spanend bearbeitet, um darin ein Negativ der auf der Linse vorzusehenden Mikrostruktur auszubilden, die dann durch Gießen der Linse oder durch Stempeln bzw. Prägen auf die entsprechende Linsenfläche übertragen wird.

Solche Mikrostrukturen sind aufgrund ihrer Dimension (typischerweise 0,3 - 5 µm axial, 1 - 500 µm lateral) oft sehr empfindlich und werden durch Verschmutzungen und/oder Beschädigungen (Verkratzen) in ihrer optischen Wirkung leicht beeinträchtigt. Vor allem wenn eine Linse auf einer Linsenfläche mit einer Mikrostruktur versehen ist, während die andere Linsenfläche noch weiteren mechanischen Bearbeitungen, wie Fräsen, Drehen, Schleifen und/oder Polieren, unterzogen werden muss, muss die beispielsweise bereits durch ein Gießen des Linsenrohlings hergestellte Mikrostruktur vor Beschädigungen und Verschmutzungen geschützt werden.

Besonders wichtig und verbreitet ist die mechanische Bearbeitung von beispielsweise gegossenen Linsenrohlingen bei der Herstellung von Brillengläsern aus Halbfertigprodukten, wobei durch die mechanische Bearbeitung beispielsweise eine individuelle Rezeptglasfläche (oder auch Rezeptfläche bezeichnet) erzeugt wird. Wichtige Schritte dieser Rezeptglasfertigung (RGF) werden im Folgenden beispielhaft beschrieben:
So wird beispielsweise zunächst ein Halbfertigprodukt gegossen. Bei diesem weist eine Fläche (typischerweise die Vorderfläche), die im Folgenden auch als Primärfläche bezeichnet wird, bereits die finale Geometrie, insbesondere hinsichtlich der refraktiven Eigenschaften wie der Verteilung spärischer und zylindrischer Wirkung(en), und ggf. sogar die finale Oberflächenbeschaffenheit (z.B. hinsichtlich der gewünschten geringen Rauheit und eventuell sogar einschließlich einer Mikrostruktur) auf.

Die Geometrie kann dabei typischerweise sphärisch (z.B. generell bei Einstärkengläsern sowie bei Rückflächenprogressivgläsern) sein, torisch bzw. atorisch (bei Einstärkengläsern oder speziellen Rückflächenprogressivgläsern zur Verbesserung der Abbildungseigenschaften), bereits eine zylindrische Komponente enthalten oder bereits einen Progressionsverlauf aufweisen (bei Vorderflächenprogressivgläsern bzw. Gläsern mit Progressionsanteilen auf beiden Flächen).

In einem weiteren Schritt erhält die der Primärfläche abgewandte Fläche (d.h. typischerweise die Rückfläche), die im Folgenden auch als Rezeptglasfläche (RGF-Fläche) bezeichnet wird, die gewünschte Oberflächengeometrie. Diese kann mit klassischen Werkzeugen (z.B. Schleifschalen) oder mit Hilfe (computerunterstützter) Freiformmaschinen gefertigt werden.

Bei der Verwendung klassischer Werkzeuge für ein klassisches Schleifen werden typischerweise sphäro-zylindrische Kombinationen mit Hilfe von speziellen Schleifschalen gefertigt. Entsprechend wird diese Technologie typischerweise für einfache Einstärkengläser, Einstärkengläser mit speziell optimierten Primärflächen sowie Progressivgläsern mit einer Progression auf der Vorderfläche eingesetzt. Der Prozess besteht in der Regel aus drei Schritten. Der erste Schritt wird mittels Fräsen durchgeführt und ist mit einem vergleichsweise hohen Materialabtrag (z.B. lokal bis etwa 15 mm) verbunden. Im zweiten Schritt wird mittels einer Schleifschale die Fläche feingeschliffen. Entsprechend weisen die Werkstücke nach diesem Schritt eine hohe Rauheit (z.B. RZ etwa 8 - 12 µm, RA etwa 0,3 - 0,6 µm) auf. Entsprechend wird ein weiterer Prozess, das Polieren, nachgeschaltet, bei dem bei geringerem Abtrag (z.B. etwa 10 - 20 µm) die Fläche die angestrebte Form mit der entsprechenden Rauheit (RZ etwa 1 - 2 µm, RA etwa 0,08 - 0,25 µm) erhält.

Bei der klassischen Freiformtechnik (Fräsen-Schleifen-Polieren; Unimetrik/Polymetrik) handelt es sich um eine Freiformtechnologie, mit der nahezu beliebige Flächen gefertigt werden können. Entsprechend wird diese Technologie insbesondere bei Progressivgläsern eingesetzt, bei denen sich zumindest ein Teil der Progression sowie die sphäro-zylindrische Wirkung auf der RGF-Fläche befindet. Weiterhin können mit dieser Technologie wirkungsoptimierte Gläser (z.B. Multigressiv), individuell optimierte Gläser und Gläser mit optimierten sphärozylindrischen Wirkung sowohl als Gleitsicht- als auch als Einstärkengläser gefertigt werden. Die Primärfläche ist dabei meist sphärisch, kann aber auch zumindest einen Teil der Progression enthalten.

Der Prozess der klassischen Freiformtechnik besteht in der Regel aus den drei Schritten Fräsen oder Vorschleifen, Feinschleifen und Polieren, für die Werkzeuge mit unterschiedlichen Rauheiten und Geschwindigkeiten eingesetzt werden. Damit werden unterschiedlich hohe Abträge und Oberflächengüten (Erreichung der Form und Rauheit) erzielt:
- Fräsen oder Vorschleifen
   (Abtrag: bis etwa 15 mm; Rauigkeit RZ > 20 µm; RA > 5 µm)
- Feinschleifen
   (Abtrag: bis 0,2 mm; Rauigkeit RZ: 4-10 µm; RA 0,5 - 1 µm)
- Polieren/Finisching
   (Abtrag: 4-20 µm; Rauigkeit RZ: 1-2 µm; RA 0,05 - 0,4µm)

Für einen alternativen Prozess, den sogenannten Cut-to-polish-Prozess (Schneiden-Polieren) gilt prinzipiell das oben für die klassische Freiformtechnik gesagte:
- Fräsen
   (Abtrag: bis 15 mm; Rauigkeit RZ > 20 µm; RA 5µm)
- Drehen
   (Abtrag: max. 0,2 mm; Rauigkeit RZ: 4-10 µm; RA 0,2-0,6µm)
- Polieren
   (Abtrag: 4-10 µm; Rauigkeit RZ: 0,5-2 µm; RA 0,03-0,2µm)

Unabhängig von der verwendeten Bearbeitungstechnologie wird der Blank (also der Rohling bzw. das Halbfertigprodukt) üblicherweise geblockt. Dazu können beispielsweise niedrig schmelzenden Metalllegierungen (sogenanntes "Alloy") in Kombination mit Klebefolien oder spezielle Lackschichten sowie einem Grundträger zum Einsatz kommen. Danach können die Flächen bzw. das Glas veredelt werden (z.B. Färben, Aufbringen von Hart-, AR- bzw. Topcoat-Schichten).

US 5 543 966 A offenbart eine hybride, refraktive und achromatische Linse für den Einmal-Gebrauch oder zur Verwendung in kostengünstigen Einzellinsen-Kameras. Die Linse weist dabei zumindest eine gekrümmte Oberfläche zur Erzeugung der refraktiven Wirkung auf und einen diffraktiven Teil zur Erzeugung einer diffraktiven Wirkung, welche im Wesentlichen dafür gedacht ist, die chromatische Aberration des refraktiven Teils über einen Wellenlängenbereich von 440 nm bis 650 nm teilweise zu kompensieren.

EP 0 369 561 A2 offenbart ein Herstellungsverfahren für Kontaktlinsen und Intraokularlinsen, wobei eine Gießform mit einer Negativstruktur der gewünschten Linse mit einer Phasenzonenplatte zum Einsatz kommt. Die Gießform ist dabei derart ausgestaltet, dass die Phasenzonenplatte beim Gießen der Kontaktlinse auf einer konkaven Seite der Linse geformt wird.

CA 2 181 937 C offenbart ein Verfahren zur Bereitstellung einer Kontaktlinse mit einer verbesserten Passgenauigkeit an das Auge des Benutzers. Dabei wird insbesondere eine Vorform an ihrer konkaven Seite an einem Spindelstab angebracht und zum Erzeugen einer diffraktiven Struktur in einer Gießform mit einer diffraktiven Struktur angeordnet, wobei der Zwischenraum zwischen der Vorform und der Oberfläche der Gießform mit einem Resin befüllt wird. Die diffraktive Struktur wird dabei durch eine Aushärtung des Resins mittels UV-Strahlung auf die Vorform appliziert. Um die Linse mit einem graduell auslaufenden Rand herzustellen ("feathering"), kann die Linse in der Gießform während der Aushärtung des Resins rotiert werden.

US 2009/046349 A1 offenbart Multifokallinsen, insbesondere als Brillengläser, mit einem Bereich, welcher eine diffraktive Wirkung aufweist. Die Linsen werden dabei aus mehreren gegossenen Schichten hergestellt, wobei zumindest eine der Schichten eine diffraktive Struktur aufweist.

Aufgabe der vorliegenden Erfindung ist es, die Herstellung von individuell gefertigten Brillengläsern mit einer diffraktiven Mikrostruktur zu vereinfachen. Diese Aufgabe wird durch ein Verfahren mit den im Anspruch 1 angegebenen Merkmalen gelöst. Bevorzugte Ausführungsformen sind Gegenstand der abhängigen Ansprüche.

So bietet die Erfindung ein Verfahren zur Herstellung eines Brillenglases, wobei zunächst ein Linsenrohling, insbesondere in Form eines Halbfertigprodukts, bereitgestellt wird. Dies kann beispielsweise durch Gießen des Linsenglasrohlings erfolgen. Als Material des Linsenrohlings kann insbesondere polymerisierbares Material verwendet werden, das nach dem Gießen beispielsweise durch Polymerisation aushärtet. Vorzugsweise wird der Linsenrohling als Halbfertigprodukt hergestellt (z.B. gegossen), bei dem eine Linsenfläche (sie wird hier auch als Primärfläche bezeichnet) bereits die endgültig gewünschte Form aufweist, ohne dass beispielsweise nach dem Gießen noch eine formgebende Bearbeitung dieser Linsenfläche erforderlich wäre bzw. vorgenommen wird. Insbesondere für die Herstellung eines Brillenglases wird als Primärfläche vorzugsweise die Vorderfläche des Brillenglases vorgesehen.

Die der Primärfläche entgegengesetzte Fläche (hier auch als Sekundärfläche bezeichnet) ist allerdings hinsichtlich ihrer refraktiven Eigenschaften noch an spezielle Flächenvorgaben anzupassen, welche mittels eines Rezepts, das Brechungseigenschaften der Linse bzw. der Sekundärfläche festlegen, vorgegeben sind. Der Linsenrohling bzw. das Halbfertigprodukt ist also bezüglich der Sekundärfläche noch nicht vollständig an die geforderten Brechungseigenschaften angepasst. Ein Grund dafür ist, dass es unter Umständen sehr aufwändig wäre, für jede geforderte optische Wirkung, wie z.B. für individuelle gefertigte Brillengläser, eine bereits vollständig angepasste Linse zu gießen. Hierfür müsste bereits die Gießform an die im Einzelfall geforderte optische Wirkung angepasst werden. Dies kann allerdings sehr aufwändig und teuer sein. Daher ist es auch herkömmlich bereits üblich, zumindest eine Fläche gemäß den Rezeptvorgaben erst nachträglich durch mechanische Bearbeitung anzupassen. Die dann den durch die Rezeptvorgaben geforderten optischen Wirkungen entsprechende Fläche wird auch als Rezeptfläche oder Rezeptglasfläche bezeichnet. Wie bereits oben ausgeführt, werden solche Rezeptglasflächen herkömmlich durch RGF-Prozesse hergestellt bzw. bearbeitet.

Die vorliegende Erfindung schlägt nun hingegen vor, zumindest eine Linsenfläche des Linsenrohlings zur Erzeugung einer Rezeptglasfläche des Brillenglases zu bearbeiten, wobei das Bearbeiten der zumindest einen Linsenfläche ein Erzeugen einer diffraktiven Mikrostruktur umfasst. Die Mikrostruktur dient insbesondere als diffraktives Gitter für sichtbares Licht. Wie bereits oben beschrieben, sind diffraktive Mikrostrukturen beispielsweise zur Korrektur unerwünschter chromatischer Fehler einer Linse (z.B. Farbsaumkorrektur) durchaus sehr vorteilhaft. Im Rahmen der vorliegenden Erfindung wurde allerdings erkannt, dass die Implementierung der Erzeugung solcher diffraktiver Mikrostrukturen in die Fertigung der Rezeptglasfläche wesentliche fertigungstechnische Vorteile mit sich bringt. So ist es damit nur mehr nötig, um sowohl die Vorteile einer individuell angepassten refraktiven Wirkung durch die Rezeptglasfläche als auch die Vorteile der diffraktiven Wirkung durch die Mikrostruktur, eine einzige Fläche zu bearbeiten. Dabei stellte sich heraus, dass insbesondere auf ein sehr zeitaufwändiges Polieren der Rezeptfläche verzichtet werden kann, da die Mikrostruktur entweder bereits in einem einzigen Arbeitsverfahren unter entsprechendem Materialabtrag zur Ausbildung der Rezeptfläche auf dem Linsenrohling oder nach dem Materialabtrag in einem eigenen Arbeitsschritt auf eine dabei entstandene, noch vergleichsweise rauhe Fläche ausgebildet werden kann und dabei die erforderliche Oberflächengüte bietet. Dazu wird die diffraktive Mikrostruktur beispielsweise durch Materialabtragung oder - umformung insbesondere direkt im Material des Linsenrohlings ausgebildet.

Besonders vorteilhaft ist das erfindungsgemäße Verfahren bei der Herstellung individuell zu fertigender Brillengläser. Dabei wird vorzugsweise als Rezeptglasfläche die Rückfläche (augenseitige Fläche) des Brillenglases bearbeitet. Als Vorderfläche wird vorzugsweise eine sphärische (z.B. generell bei Einstärkengläsern sowie bei Rückflächenprogressivgläsern) oder eine torische oder atorische (insbesondere eine einfache, rotationssymmetrische) Fläche (z.B. bei Einstärkengläsern oder speziellen Rückflächenprogressivgläsern zur Verbesserung der Abbildungseingenschaften) oder eine Fläche verwendet, die bereits eine zylindrische Komponente und/oder bereits einen Progressionsverlauf aufweist (bei Vorderflächenprogressivgläsern bzw. Gläsern mit Progressionsanteilen auf beiden Flächen).

Die Rezeptfläche wird aus einer Fläche des Linsenrohlings durch nachträgliche Bearbeitung erzeugt. Dazu wird die entsprechende Fläche des Linsenrohlings so weit verändert, bis sie die geforderten Brechungseigenschaften aufweist. Für individuell zu fertigende Brillengläser werden vor der Bearbeitung der Rezeptfläche üblicherweise individuelle Berechnungen der Rezeptfläche durchgeführt. Solche Berechnungen basieren beispielsweise auf iterativen Wellenfront- und/oder Strahldurchrechnungen (ray-tracing bzw. wavefront-tracing) bzw. Berechnungen mittels lokaler Wellenfronten. Aus den Ergebnissen solchen Berechnungs- bzw. Optimierungsverfahren lässt sich die geforderte Geometrie der Rezeptfläche für die Erreichung der geforderten Refraktion beispielsweise in Form von Pfeilhöhen ableiten, wobei hier die diffraktiven Mikrostrukturen noch nicht notwendigerweise mitgerechnet werden müssen.

Die so errechnete Rezeptfläche weicht in der Regel aber durchaus noch von der entsprechenden Fläche des Linsenrohlings ab, so dass zumindest an einigen Stellen der Fläche noch ein wesentlicher Materialabtrag erforderlich ist, der einer Materialdicke entspricht, die zumindest über der Strukturgröße der diffraktiven Mikrostruktur liegt. Der erforderliche Materialabtrag kann lokal sogar ein vielfaches über der Strukturgröße der Mikrostruktur (in Abtragungsrichtung) liegen. Um die geforderten refraktiven Eigenschaften zu erreichen wird für die Ausbildung der Rezeptfläche also insbesondere lokal (also an einigen Stellen) mehr Material abgetragen als für die reine Formung der Mikrostruktur nötig wäre. Somit umfasst das Bearbeiten der zumindest einen Linsenfläche zur Erzeugung der Rezeptfläche insbesondere ein Abtragen von Material mit einer Dicke von zumindest teilweise (also zumindest lokal) zumindest etwa 20 µm, vorzugsweise zumindest etwa 0,1 mm, noch mehr bevorzugt zumindest etwa 0,5 mm, am meisten bevorzugt zumindest etwa 2 mm.

Wie nachfolgend noch ausgeführt wird, kann das Abtragen dieses Materials dabei beispielsweise getrennt von der Ausbildung der diffraktiven Mikrostruktur in einem eigenen Arbeitsschritt oder zusammen mit der Ausbildung der diffraktiven Mikrostruktur in einem gemeinsamen Arbeitsschritt, insbesondere mittels desselben Werkzeugs erfolgen.

So umfasst das Bearbeiten der zumindest einen Linsenfläche zur Erzeugung einer Rezeptglasfläche in einer bevorzugten Ausführungsform ein Fräsen und/oder Drehen und/oder Schleifen. Vorzugsweise erfolgt dabei das Erzeugen der Mikrostruktur nach dem Fräsen bzw. Drehen bzw. Schleifen ohne dass zwischendurch ein Polieren der zumindest einen Linsenfläche erfolgt. Insbesondere erfolgt vorzugsweise nach dem Fräsen bzw. Drehen bzw. Schleifen kein Polieren der Rezeptfläche mehr. Vielmehr erkannte die Erfindung, dass durch die Ausbildung der diffraktiven Mikrostruktur ausgehend von der nach dem Fräsen bzw. Drehen bzw. Schleifen entstandenen Rezeptfläche bereits die ausreichende Oberflächengüte bewirkt wird. Dabei kann die Rauheit der Rezeptfläche (unmittelbar) vor dem Erzeugen der Mikrostruktur zumindest teilweise (also lokal) einen R_{z}-Wert von zumindest etwa 5 µm, vorzugsweise zumindest etwa 10 µm, noch mehr bevorzugt zumindest etwa 20 µm und/oder einen Rₐ-Wert von zumindest etwa 0,5 µm, vorzugsweise zumindest etwa 1 µm, noch mehr bevorzugt zumindest etwa 2 µm, am meisten bevorzugt zumindest etwa 5 µm aufweisen. Für eine Rauheitsmessung kommen insbesondere taktile und insbesondere optische Verfahren (z.B. Laserscanningmikroskop) in Frage. Dabei kann in einem Aspekt der R_{z}-Wert (bzw. der RZ-Wert) die gemittelte Rautiefe und der Rₐ-Wert (bzw. der RA-Wert) die mittlere Rauheit darstellen.

Für das Fräsen bzw. Drehen bzw. Schleifen können vorzugsweise die bereits eingangs erwähnten, entsprechenden herkömmlichen Prozessschritte verwendet werden, wobei allerdings insbesondere auf ein entsprechendes Polieren verzichtet wird. Besonders bevorzugt wird insbesondere je nach erfordertem Materialabtrag lediglich eines der genannten Verfahren (Fräsen bzw. Drehen bzw. Schleifen) eingesetzt, bevor die Mikrostruktur ausgebildet wird. So reicht die beim Fräsen entstehende Oberflächengüte (Rauheit) aus, um ausgehend davon durch Erzeugung der Mikrostruktur eine ausreichende optische Gute der herzustellenden Linse zu erhalten.

Die Erzeugung der Mikrostruktur erfolgt dann vorzugsweise durch spanende Bearbeitung oder Umformen. Bei der spanenden Bearbeitung kann CNC-Fräsen oder CNC-Drehen eingesetzt werden. Beim Drehen wird dabei bevorzugt eine Technologie des in axialer Richtung oder in Schnittrichtung ultraschallunterstützen Drehens verwendet (siehe z.B. S. Hannig, C. Brecher und C. Wenzel: "Schnelle Auslegungsmethode für ultra-schallunterstützte Zerspanung", MaschinenMarkt (13.09.12) http://www.maschinenmarkt.vogel.de/themenkanaele/produktion/ zerspanungstechnik/articles/378155/ (Stand 11.2.13); oder C. Brecher, F. Klocke, M. Winterschladen, M. Heselhaus: "Ultraschallunterstütz-tes Hartdrehen für die Fertigung von gehärteten Präzisionsstahlbauteilen", Werkstattstechnik online, Jahrgang 96 Heft 6, Seiten 396ff, VDI-Verlag (2006)). Als Werkzeugmaterial wird Diamant bevorzugt. Das Werkzeug selbst kann in Form eines Radius oder bevorzugt in Form eines Halbradius ausgeprägt sein. Typische Werkezugradien reichen dabei je nach Strukturgröße von etwa 50 µm bis bevorzugt etwa 3 µm. Um den Abtrag zu verbessern oder den Werkzeugverschleiß zu senken kann auch zwei- oder mehrstufig mit absteigenden Werkzeugradien und zunehmender Oberflächengüte vorgegangen werden.

Als Methode des Umformens wird vorzugsweise Pressen ggf. mit thermischer Unterstützung genutzt.

Insbesondere kann die Erzeugung der diffraktiven Mikrostruktur durch eine spanende Bearbeitung mit einem Materialabtrag erfolgen, der zumindest teilweise (lokal) größer ist als die Strukturgröße der diffraktiven Mikrostruktur in der Abtragungsrichtung (axial). So kann das Erzeugen der Mikrostruktur ein Abtragen von Material mit einer Dicke von zumindest teilweise (also zumindest lokal) zumindest etwa 20 µm, vorzugsweise zumindest etwa 0,1 mm, noch mehr bevorzugt zumindest etwa 0,5 mm, am meisten bevorzugt zumindest etwa 2 mm umfassen. Insbesondere in diesen Fällen kann je nach gefordertem Materialabtrag zu Erzeugung der Rezeptfläche aus dem Linsenrohling die geforderte Materialabtragung sogar in einem einzigen Schritt zusammen mit der Ausbildung der Mikrostruktur erfolgen. Es ist in diesem Fall unter Umständen also nicht mehr erforderlich einen vorangehenden Fräs-, Dreh- oder Schleif-Schritt auszuführen.

Ein wesentlicher wirtschaftlicher Vorteil der Erfindung besteht darin, dass auf Grund des mit der spanenden Fertigung der Mikrostruktur verbundenen Materialabtrags (bzw. Materialumverteilung) zumindest der letzte Schritt der RGF-Bearbeitung entfallen kann. Dies betrifft bei Vergleich mit den oben genannten, herkömmlichen Verfahren jeweils mindestens den Polierschritt, im Vergleich zur klassischen Freiformtechnik kann gegebenenfalls sogar das Schleifen entfallen. Dies ist insbesondere bei Verwendung von Freiformtechnologie vorteilhaft, da hier das flächentreue Schleifen bzw. Polieren konzeptionell aufwändig ist.

Bei hinreichend vorgeformten Blanks, beim Schneiden der Struktur mit hinreichend hohem Materialabtrag bzw. beim Umformen mit entsprechend hoher Materialumverteilung können sogar sämtliche vorgelagerte RGF-Schritte entfallen und die finale Oberfläche direkt mit der Erzeugung der Mikrostruktur (insbesondere mit den genannten Technologien) gefertigt werden.

Vorzugsweise umfasst das Verfahren vor dem Bearbeiten der zumindest einen Linsenfläche ein Befestigen eines Linsenhalteblocks an der der zu bearbeitenden Linsenfläche abgewandten Linsenfläche, wobei der Linsenhalteblock vorzugsweise erst nach dem Erzeugen der diffraktiven Mikrostruktur wieder entfernt wird. Somit wird in einer bevorzugten Ausführung der Erfindung beim Einbringen der diffraktiven Mikrostruktur derselbe Block wie bei eventuell vorgelagerten RGF-Bearbeitungsschritten. Dadurch kann zum einen die geometrische Korrelation zwischen den beiden Schritten (und damit die gemetrische Korrelation zwischen den lokalen Verteilungen der refraktiven und der diffraktiven Wirkungsvorgaben) einfach und mit besonders hoher Genauigkeit sichergestellt werden. Zum anderen können die Prozessschritte des Ab- und anschließenden Neu-Blockens eingespart werden. Bei Verwendung von Umformtechnologien kann dabei der Block zumindest einen Teil des primärseitigen Stempels darstellen.

Handelt es sich bei der Rezeptfläche (z.B. Rückfläche) um eine nichtrotationssymmetrische Fläche, muss die Änderung der Höhe der Grundfläche (Pfeilhöhe) in Abhängigkeit vom Winkel beim Aufbringen der Struktur berücksichtigt werden. Dies bedeutet insbesondere, dass beim Einsatz des (CNC-)Drehens das Werkzeug vorzugsweise entsprechend in Richtung der Drehachse nachgeführt wird. Bei Verwendung von Umformtechnologien wird vorzugsweise entsprechend auf die Orientierung des Umformwerkzeuges geachtet.

Die Erfindung wird nachfolgend anhand bevorzugter Ausführungsformen mit Bezug auf die begleitenden Zeichnungen beschrieben. Dabei zeigen:
- Fig. 1: schematische Darstellung von Brillengläsern, mit einer diffraktiven Mikrostruktur an einer Rezeptglasfläche, welche mit einem Verfahren gemäß einer bevorzugten Ausführungsform der vorliegenden Erfindung hergestellt wurden;
- Fig. 2A: schematische Darstellung einzelner Verfahrensschritte in einem beispielhaften Herstellungsverfahren gemäß einer bevorzugten Ausführungsform der vorliegenden Erfindung; und
- Fig. 2B: schematische Darstellung einzelner Verfahrensschritte in einem beispielhaften Herstellungsverfahren gemäß einer weiteren bevorzugten Ausführungsform der vorliegenden Erfindung.

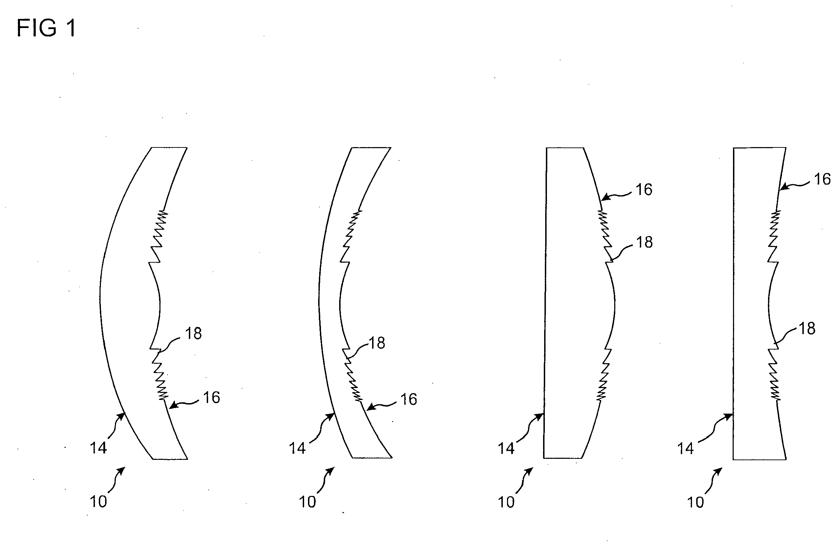

Fig. 1 veranschaulicht Beispiele von Brillengläsern 10 unterschiedlicher Wirkungen und Flächenkrümmungen. Dabei weisen die Brillengläser 10 jeweils eine Vorderfläche 14 (hier auch als Primärfläche bezeichnet) und eine Rückfläche 16 (augenseitige Fläche, hier auch als Sekundärfläche bezeichnet) auf. Die Rückfläche 16 ist dabei als Rezeptfläche insbesondere gefertigt. Dabei ist die Rezeptfläche 16 mit einer diffraktiven Mikrostruktur 18 ausgebildet, die im Material des Brillenglases, also im Brillenglaskörper, welcher in der Herstellung einen Teil eines beispielsweise gegossenen Brillenglasrohlings bildet. Die Darstellung der diffraktiven Mikrostruktur 18 in Fig. 1 soll als rein schematisch angesehen werden. Insbesondere ist die jeweilige Mikrostruktur 18 nicht maßstabsgetreu dargestellt. Üblicherweise ist die Mikrostruktur 18 im Vergleich zum Brillenglaskörper wesentlich kleiner. Typische Dimensionen diffraktiver Mikrostrukturen liegen vorzugsweise bei etwa 0,3 bis 5 µm in axialer Richtung (also in Dickenrichtung des Brillenglases) und bei etwa 1 bis 500 µm in lateraler Richtung. Von links nach rechts sind in Fig. 1 nacheinander beispielhaft eine Pluslinse mit konvexer Basiskurve (Vorderfläche 14), eine Minuslinse mit konvexer Basiskurve (Vorderfläche 14), eine Pluslinse mit planer Basiskurve (Vorderfläche 14) und eine Minuslinse mit planer Basiskurve (Vorderfläche 14) dargestellt.

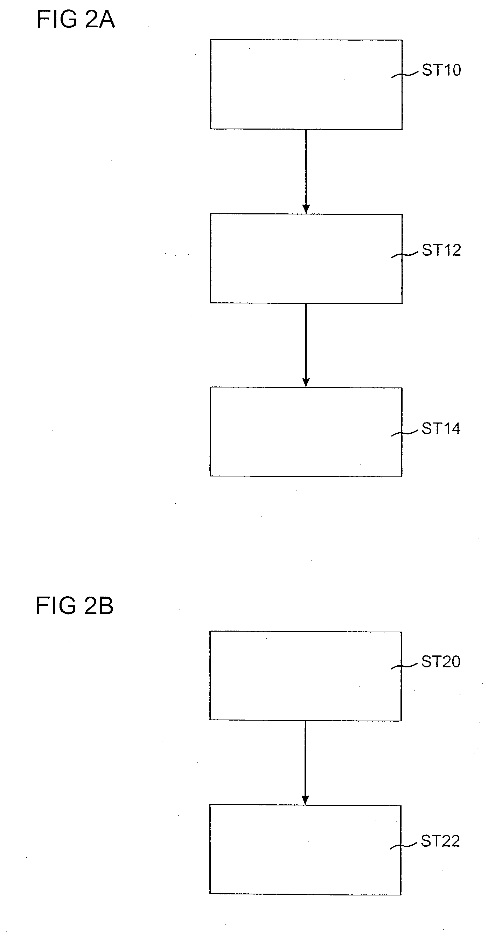

In Fig. 2A ist ein Beispiel eines Herstellungsverfahrens gemäß einer bevorzugten Ausführungsform der Erfindung veranschaulicht. So wird in dieser bevorzugten Ausführungsform zunächst in einem Schritt ST10 ein Brillenglasrohling bereitgestellt, welcher beispielsweise an der Vorderfläche bereits die endgültig gewünschte Flächenform aufweist, während die Rückfläche noch zur Erzeugung der gewünschten Rezeptfläche in ihrer Flächenform geändert werden muss. Dies erfolgt in der in Fig. 2A dargestellten, bevorzugten Ausführungsform in einem eigenen Schritt (oder mehreren Schritten) ST12, in dem die Rezeptfläche mit der geforderten refraktiven Wirkung z.B. durch Fräsen und/oder Drehen und/oder Schleifen hergestellt wird. Die Rezeptglasfläche stellt dabei eine in ihrer geforderten sphärischen und/oder astigmatischen Wirkung vorgegebene Flächenform dar, welche eine ausgehend vom Brillenglasrohlung oder Halbfertigprodukt veränderte (an Vorgabewerte angepasste) Fläche der Linse bildet. Insbesondere handelt es sich dabei um eine Fläche, die an die individuelle Verordnung einer Brillenträgers angepasst wird. Die Vorgabewerte können dabei insbesondere durch lokale Pfeilhöhen als Ergebnis einer individuellen Flächenberechnung bereitgestellt werden. In Schritt ST12 wird somit vorzugsweise lokal unterschiedlich viel Material abgetragen, um schließlich die geforderten Pfeilhöhen der Rezeptfläche zu erreichen. In der bevorzugten Ausführungsform von Fig. 2A ist dabei die diffraktive Mikrostruktur nach dem Schritt ST12 noch nicht vorhanden. Allerdings kann die resultierende Rezeptfläche noch eine so große Rauheit aufweisen, dass diese für ein endgültiges Brillenglas mit herkömmlichen Qualitätsanforderungen ungenügend wäre.

In einem nachfolgenden Schritt ST14 wird nun ausgehend von dieser eventuell noch recht rauhen Rezeptfläche eine diffraktive Mikrostruktur an der Rezeptfläche erzeugt. Insbesondere wird dieser diffraktive Mikrostruktur im Material des Brillenglases (bzw. Brillenglasrohlings) erzeugt. Das Einbringen der Mikrostruktur kann insbesondere in der bereits weiter oben beschriebenen Weise durch spanende Bearbeitung oder Umformen geschehen. Dabei kann auf ein aufwändiges Polieren der Rezeptfläche (insbesondere nach dem Schritt ST12) verzichtet werden.

Insbesondere soweit für die Erzeugung der Mikrostruktur 18 ein spanendes Verfahren oder ein anderes Verfahren mit ausreichender Änderung der Fläche des Rohlings hin zur Rezeptfläche (z.B. durch Materialabtragung oder Umformung) eingesetzt wird, kann in einer weiteren bevorzugten Ausführungsform auf eine vorangehende Bearbeitung der Brillenglasrohlings zur Erzeugung der Rezeptfläche in einem eigenen Verfahrensschritt (insbesondere mit eigenen Werkzeugen) verzichtet werden. Dies ist insbesondere in Fig. 2B schematisch dargestellt.

Dabei wird auch in dieser Ausführungsform gemäß Fig. 2B in einem Schritt ST20 zunächst ein Brillenglasrohling bereitgestellt, welcher beispielsweise an der Vorderfläche bereits die endgültig gewünschte Flächenform aufweist, während die Rückfläche noch zur Erzeugung der gewünschten Rezeptfläche in ihrer Flächenform geändert werden muss. In der in Fig. 2B dargestellten bevorzugten Ausführungsform erfolgt dies allerdings zusammen mit der Erzeugung der diffraktiven Mikrostruktur in einem einzigen Arbeitsschritt ST22. Auch in diesem Fall kann somit auf ein aufwändiges Polieren und sogar auf ein Schleifen der Rezeptfläche verzichtet werden.

In einer bevorzugten Ausführungsform wird auf der diffraktiven Mikrostruktur eine Schutzschicht abgeschieden. Soll die Mikrostruktur optisch wirksam werden, muss sich diese Schutzschicht im Brechungsindex unterscheiden und hinreichend dick sein, um optisch wirksam zu werden. Idealerweise wird sie zudem als Hartschicht für das fertige Produkt verwendet.

Insgesamt handelt es sich bei der hier vorgestellten Erfindung insbesondere um ein Verfahren zur Bereitstellung von Brillengläsern, die auf mindestens einer Seite eine Mikrostruktur aufweisen. Es wird ein Vorgehen beschrieben, bei dem die Struktur nach der Bearbeitung einer Fläche des Glases in diese eingebracht wird. Dieses Verfahren bietet im Vergleich zu anderen Verfahren den Vorteil, dass Bearbeitungsschritte entfallen können, die dazu dienen, die notwendige optische Qualität der entsprechenden Oberfläche zu erreichen. Als konkretes Ausführungsbeispiel sei die Mikrostrukturierung der Rückfläche eines Brillenglases durch CNC gesteuertes Drehen nach einer ersten formgebenden Bearbeitung genannt, wobei der Polierschritt entfällt.

Bei der hier vorgestellten Erfindung handelt es sich um ein Verfahren zur Bereitstellung von Brillengläsern, die auf mindestens einer Seite eine Mikrostruktur aufweisen. Dabei bietet die Erfindung insbesondere ein Verfahren bei dem keine speziellen Halbfertigprodukte erforderlich sind, bei dem die Struktur bei der Bearbeitung der zu strukturierenden Fläche noch nicht berücksichtigt werden muss und bei dem wenigstens der letzte Polierschritt entfallen kann.

### Bezugszeichenliste

- 10: Brillenglas
- 14: Vorderfläche (Primärfläche) des Brillenglases
- 16: Rückfläche (Sekundärfläche) des Brillenglases
- 18: diffraktive Mikrostruktur

## Patentansprüche

1. Verfahren zur Herstellung eines Brillenglases (10), umfassend:
- Bereitstellen eines Linsenrohlings; und
- Bearbeiten zumindest einer Linsenfläche (16) des Linsenrohlings zur Erzeugung einer Rezeptglasfläche des Brillenglases (10), umfassend:
-- ein Fräsen und/oder Drehen und/oder Schleifen; und
-- ein Erzeugen einer diffraktiven Mikrostruktur (18) nach dem Fräsen und/oder Drehen und/oder Schleifen, ohne dass zwischendurch ein Polieren der zumindest einen Linsenfläche (16) erfolgt.

2. Verfahren nach einem der vorangegangenen Ansprüche, wobei die Rezeptglasfläche die Rückfläche des Brillenglases (10) ist.

3. Verfahren nach Anspruch 1 oder 2, wobei das Bearbeiten der zumindest einen Linsenfläche (16) zur Erzeugung der Rezeptfläche ein Abtragen von Material mit einer Dicke von zumindest teilweise zumindest 20 µm, vorzugsweise zumindest 0,1 mm, noch mehr bevorzugt zumindest 0,5 mm, am meisten bevorzugt zumindest 2 mm umfasst.

4. Verfahren nach einem der Ansprüche 1 bis 3, wobei die Rauheit der Rezeptfläche vor dem Erzeugen der Mikrostruktur (18) zumindest teilweise einen R_{z}-Wert von zumindest 5 µm, vorzugsweise zumindest 10 µm, noch mehr bevorzugt zumindest 20 µm und/oder einen Rₐ-Wert von zumindest 0,5 µm, vorzugsweise zumindest 1 µm, noch mehr bevorzugt zumindest 2 µm, am meisten bevorzugt zumindest 5 µm aufweist.

5. Verfahren nach einem der Ansprüche 1 bis 4, wobei das Erzeugen der diffraktiven Mikrostruktur (18) durch eine spanende Bearbeitung mit einem Materialabtrag erfolgt, der zumindest teilweise größer ist als die Strukturgröße der diffraktiven Mikrostruktur (18) in der Abtragungsrichtung.

6. Verfahren nach Anspruch 5, wobei das Erzeugen der Mikrostruktur (18) ein Abtragen von Material mit einer Dicke von zumindest teilweise zumindest 20 µm, vorzugsweise zumindest 0,1 mm, noch mehr bevorzugt zumindest 0,5 mm, am meisten bevorzugt zumindest 2 mm umfasst.

7. Verfahren nach einem der Ansprüche 1 bis 6, wobei das Bereitstellen des Linsenrohlings ein Gießen umfasst.

8. Verfahren nach einem der Ansprüche 1 bis 7, wobei das Verfahren vor dem Bearbeiten der zumindest einen Linsenfläche (16) ein Befestigen eines Linsenhalteblocks an der der zu bearbeitenden Linsenfläche (16) abgewandten Linsenfläche (14) umfasst, wobei der Linsenhalteblock erst nach dem Erzeugen der diffraktiven Mikrostruktur (18) wieder entfernt wird.

9. Verfahren nach einem der Ansprüche 1 bis 8, wobei die diffraktive Mikrostruktur (18) im Material des Linsenrohlings ausgebildet wird.

## Claims

1. Method of manufacturing a spectacle lens (10), comprising:
- Providing a lens blank, and
- Processing at least one lens surface (16) of the lens blank to produce a prescription glass surface of the spectacle lens (10), comprising:
a milling and / or turning and / or grinding; and
- Producing a diffractive microstructure (18) after the milling and / or turning and / or grinding without an interpolating of the at least one lens surface (16).

2. The method according to any one of the preceding claims, wherein the prescription glass surface is the rear surface of the spectacle lens (10).

3. The method according to claim 1 or 2, wherein the processing of the at least one lens surface (16) for producing the prescription surface results in removal of material having a thickness of at least partially at least 20 µm, preferably at least 0.1 mm, more preferably at least 0.5 mm, most preferably at least 2 mm.

4. The method according to any one of claims 1 to 3, wherein the roughness of the prescription surface before generating the microstructure (18) has at least partially an R2 value of at least 5 µm, preferably at least 10 µm, more preferably at least 20 µm and / or an R3 value of at least 0.5 µm, preferably at least 1 µm, more preferably at least 2 µm, most preferably at least 5 µm.

5. The method according to any one of claims 1 to 4, wherein the generation of the diffractive microstructure (18) is achieved by an exciting machining with a material removal, which is at least partially greater than the structure size of the diffractive microstructure (18) in the removal direction.

6. The method according to claim 5, wherein the generating of the microstructure (18) comprises removing material having a thickness of at least partially at least 20 µm, preferably at least 0.1 mm, more preferably at least 0.5 mm, most preferably at least 2 mm.

7. The method according to any one of claims 1 to 6, wherein providing the lens blank comprises casting.

8. The method according to any one of claims 1 to 7, wherein prior to processing of the at least one lens surface (16), the method comprises attaching a lens holding block to the lens surface (14) facing away from the lens surface to be processed (16), wherein the lens holding block is removed again only after production of the diffractive microstructure (18).

9. The method according to any one of claims 1 to 8, wherein the diffractive microstructure (18) is formed in the material of the lens blank.

## Revendications

1. Procédé de fabrication d'un verre de lunettes (10) comprenant:
- fournir une lentille vierge, et
- traiter au moins une surface de lentille (16) de la lentille vierge pour produire une surface de lentille de prescription du verre de lunettes (10), comprenant:
un fraisage et / ou tournage et / ou meulage; et
- production d'une microstructure diffractive (18) après le fraisage et / ou tournage et / ou meulage, sans polissage entretemps de la au moins une surface de lentille (16).

2. Le procédé selon l'une quelconque des revendications précédentes, dans lequel la surface de lentille de prescription est la surface arrière du verre de lunettes (10).

3. Procédé selon la revendication 1 ou 2, dans lequel le traitement d'au moins une surface de lentille (16) pour générer la surface de prescription, comprend un enlèvement de matière d'une épaisseur d'au moins partiellement d'au moins 20 µm, de préférence d'au moins 0,1 mm, de préférence d'au moins 0,5 mm, de préférence d'au moins 2 mm.

4. Procédé selon l'une quelconque des revendications 1 à 3, dans lequel la rugosité de la surface de prescription avant la formation de la microstructure (18) comprend au moins partiellement une valeur R2 d'au moins 5 µm, de préférence d'au moins 10 µm, encore plus préférablement au moins 20 µm et / ou une valeur R3 d'au moins 0,5 µm, de préférence d'au moins 1 µm, de préférence encore d'au moins 2 µm, plus préférablement d'au moins 5 µm.

5. Procédé selon l'une quelconque des revendications 1 à 4, dans lequel la génération de la microstructure diffractive (18) par un usinage d'excitation est réalisée avec un enlèvement de matière, qui est au moins partiellement plus grand que la taille de la caractéristique de la microstructure diffractive (18) dans la direction d'enlèvement.

6. Procédé selon la revendication 5, dans lequel la génération de la microstructure (18) comprend un enlèvement de matière d'une épaisseur d'au moins partiellement d'au moins 20 µm, de préférence d'au moins 0,1 mm, plus préférablement d'au moins 0,5 mm, de préférence au moins 2 mm.

7. Procédé selon l'une quelconque des revendications 1 à 6, dans lequel la réalisation de la lentille vierge comprend un moulage.

8. Procédé selon l'une quelconque des revendications 1 à 7, dans lequel le procédé de modification d'au moins une surface de lentille (16) comprend la fixation d'un bloc de maintien de lentille à la surface de lentille (16) opposée à la surface de lentille à traiter (14), dans lequel le bloc de maintien de lentille est seulement retirée après avoir généré la microstructure diffractive (18).

9. Procédé selon l'une quelconque des revendications 1 à 8, dans lequel la microstructure diffractive (18) est formée dans le matériau de la lentille vierge.
